# EUROPEAN PATENT SPECIFICATION

(11) **EP 1 550 493 B1**
(45) Date of publication and mention of the grant of the patent: **11.07.2007**
(21) Application number: 03794247.1
(22) Date of filing: 05.09.2003
(51) Int. Cl.: B01D 17/022, B01D 17/032, B01D 21/02, A47B 77/02, E03C 1/26

(54) **SINK WITH OIL CONTENT RECOVERY FUNCTION**
SPÜLBECKEN MIT ÖLGEHALTRÜCKGEWINNUNGSFUNKTION
RESERVOIR DE RECUPERATION D'HUILE

(30) Priority: 08.09.2002 JP 2002302354
(43) Date of publication of application: 06.07.2005
(73) Proprietor: SATO, Tadayoshi, Arakawaku, Tokyo 116 (JP)
(72) Inventor: SATO, Tadayoshi, Arakawaku, Tokyo 116 (JP)
(74) Representative: Klingseisen, Franz
(86) International application number: PCT/JP2003/011340
(87) International publication number: WO 2004/022197

(56) References cited:
- JP-A- 9 117 756
- JP-A- 2001 179 248
- US-A- 5 637 234

## Description

### Technology field (Field of the Invention):

This invention relates to a sink having means for recovering oil content separated from wastewater flowing into an opening of a basin bottom, based on the difference in specific gravity between oil content and water,.

### Background art (Background of the Invention):

Conventionally, for treatment of wastewater and garbage in a sink, it is known as described in Japanese unexamined patent application No.11-217861 that such bigger solid contents as residual food are caught by a net and then residual wastewater is discharged from the sink.

As also shown in Japanese unexamined patent application No.05-118064, solid contents of wastewater and garbage are crushed finely by power to be fluid prior to discharging the wastewater.

The conventional methods as above have following problem: oil contents of wastewater, especially liquid fat and small garbage in the sink are, without being removed, discharged into septic tanks, sewers and rivers, which are accordingly polluted.

Object according to this invention is, for better environment conservation, to provide a sink with structure that recovers separated oil content and garbage of the wastewater and then discharges the wastewater at least in state of reduced oil content.

### Disclosure of the invention (Summary of the invention):

The sink according to the invention has a separation vessel (e.g. a separation vessel 5) for separating oil content from the wastewater flowing into an opening (e.g. an opening 2a) at bottom thereof, based on the difference in specific gravity between the oil content and water content, a water storage vessel (e.g. a water storage vessel 6) forming a letter U-shaped passage as a whole together with the separation vessel and storing the wastewater sent from the separation vessel up to a predetermined water level, a draining means (e.g. a buffer vessel 8 for flooded water, a water discharge pipe 9, a water discharge hose 10) for discharging water coming from the water storage vessel, and an open/close means (e.g. an open/close cock 5C) for recovering the oil content separated from the wastewater that floats inside the separation vessel at a water level corresponding to the predetermined water level.

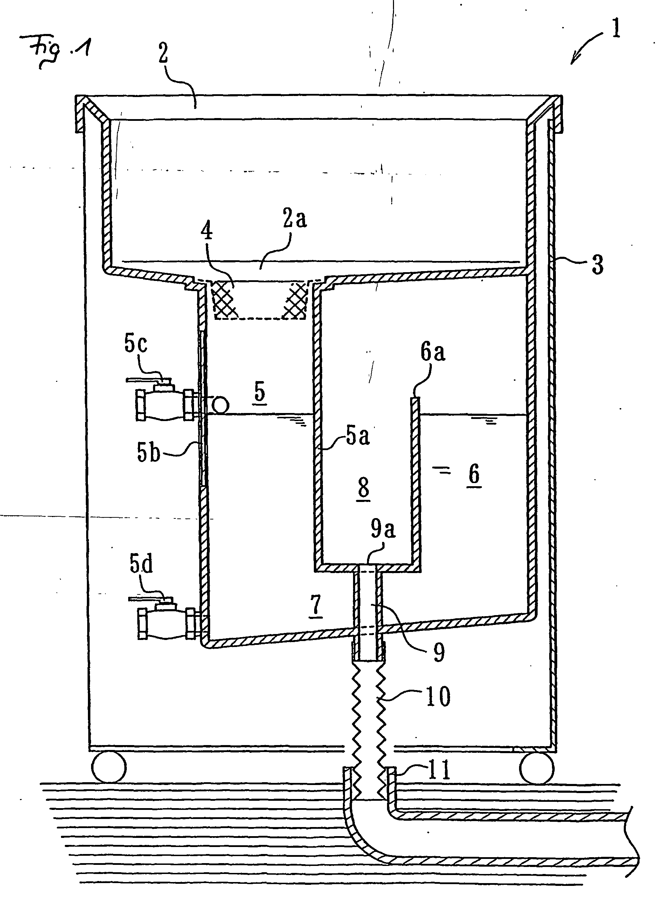

Further to the above, the draining means has a structure including the buffer vessel for flooding water from the storage vessel (e.g. the buffer vessel 8 for flooding water shown in Fig.1 to 3) formed between the separation vessel and the water storage vessel.

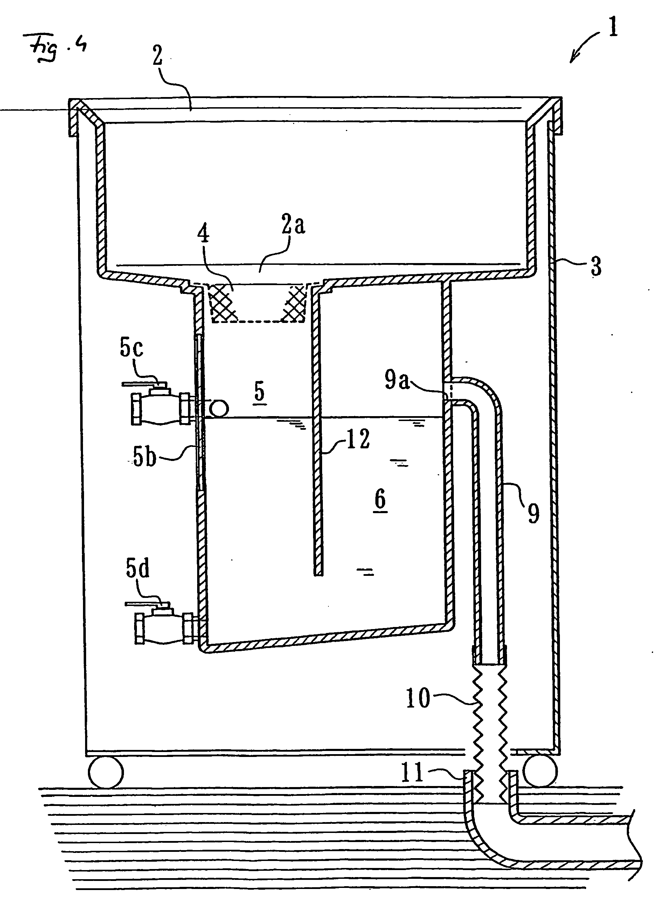

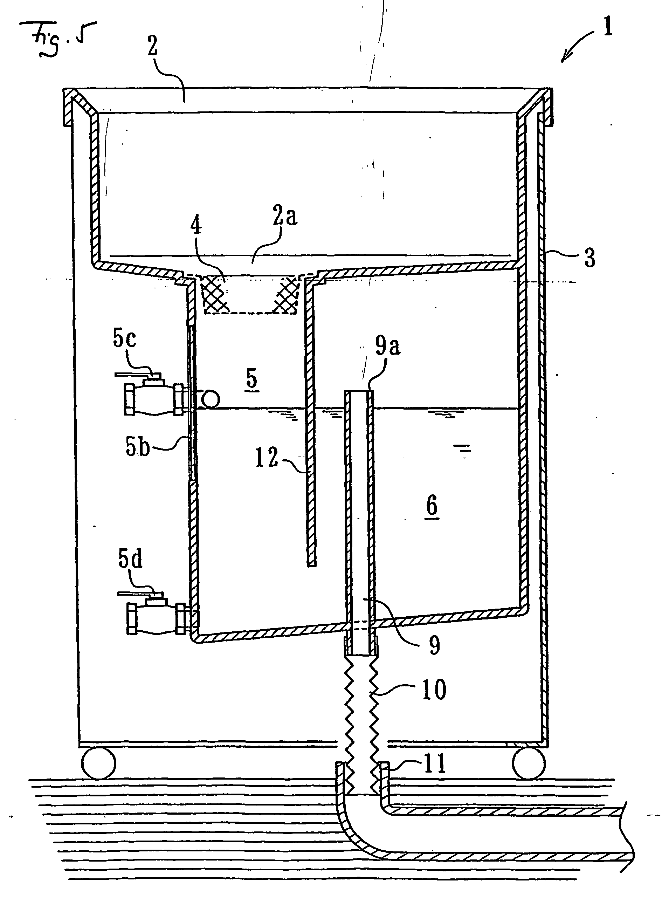

Further to the above, the separation vessel and the water storage vessel are adjacent each other with a partition member (e.g. a partition wall 12 shown in Fig.4 and 5) as a common side wall member for forming the letter U-shaped passage, and the draining means has a structure of an inlet part (e.g. an inlet part 9a shown in Fig.4) formed at the predetermined water level on a circumferential side wall of the water storage vessel and a pipe shaped member connected to the inlet part and formed outside the water storage vessel (e.g. a water discharge pipe 9, a water discharge hose 10 shown in FIg.4).

Further to the above, the separation vessel and the water storage vessel are adjacent with the partition member (e.g. a partition wall 12 shown in Fig.5), the common peripheral side wall member for forming the letter U-shaped passage, and the draining means has a structure of an inlet part (e.g. an inlet part 9a shown in Fig.5) at the predetermined water level in the water storage vessel and the pipe-shaped member connected to the inlet part and extended outside of the water storage vessel (e.g. a water discharge pipe 9 and a water discharge hose 10 shown in FIg.5).

According to using of the sink as described above, the wastewater becomes so-called oil-free state in which oil content of the wastewater is fully separated from water content thereof, and then almost only water content can be discharged to a sewer. The sink therefore contributes to keeping environment conservation of wastewater treatment and rivers.

The oil content contained in the wastewater can effectively be recovered (taken out) out of the sink by forming a simple structure of the separation vessel for separating and storing it from the wastewater, and the water storage vessel for storing the oil free wastewater up to a predetermined water level, arranged at a downstream path thereof.

Further to the above, garbage other than the oil content (which garbage has different specific gravity from that of water) may be also recovered from the wastewater.

### Brief Description of the drawings:

Fig.1 shows a schematic diagram in so-called state of rest (non-use state) after recovering oil content, out of sink, stored in the separation vessel by using the sink according to an embodiment 1.
Fig.2 shows a schematic diagram in state of discharging wastewater from the sink of Fig.1 subsequent to flowing into the separation vessel and then into the water storage vessel.
Fig.3 shows a schematic diagram in state of oil content's floating, separated from the wastewater in the separation vessel of the sink shown in Fig.1.
Fig.4 shows a schematic diagram in state of rest (non-use state) after recovering oil content, out of sink, stored in the separation vessel by using the sink according to an embodiment 2.
Fig. 5 shows a schematic diagram in state of rest (non-use state) after recovering oil content, out of sink, stored in the separation vessel by using the sink according to an embodiment 3.
Fig.6 shows dimensions of each parts of the sink shown in Fig.1.

The states of Fig.4 and Fig.5 are each corresponding to the state shown in Fig.1 and a major difference among them is a structure of a draining means.

### Best mode of embodiments according to the invention (Description of specific embodiments):

The invention is explained in detail with reference to the attached figures (Fig.1 to Fig.6).

In the figures,
1 is a sink,
2 is a basin of the sink 1, 2a is an opening provided at the bottom of said basin for discharging wastewater from the sink,
3 is a -cabinet of the sink,
4 is a garbage receiver provided at the opening 2a
5 is a separation vessel extended from the opening 2a, 5a is a backside wall of the separation vessel, 5b is a water level window for checking the inside space (such as separated oil content) of the separation vessel on its front face, 5c is a upper open/close cock for taking out floating garbage and oil content and so on from the separation vessel, 5d is a lower open/close cock for taking out sedimentary garbage and wastewater stored in the separation vessel, 5e is sedimentary garbage at the bottom part of the separation vessel, 5f is a separated oil content from the wastewater, 5g is a boundary part between the oil content and the residual wastewater
6 is a water storage vessel with water level auto-setting function for setting a water level of the separation vessel 5 up to the same level of the upper open/close cock 5c by storing the wastewater coming from the separation vessel 5, 6a is a flooding water wall for defining the full water level of the water storage vessel,
7 is a connecting space at the inner bottom between the separation vessel 5 and the water storage vessel 6 of the sink (the embodiment 1),
8 is a buffer vessel for receiving the flooded wastewater from the water storage vessel 6,
9 is a water discharge pipe, 9a is an inlet part of the water discharge pipe,
10 is a water discharge hose connected to the water discharge pipe,
11 is a water discharge passage connected to the outlet of the water discharge hose,
12 is a partition wall as a common side wall of the separation vessel 5 and the water storage vessel 6 (the embodiments 2 and 3).

The separation vessel 5, (the connecting space 7) and the water storage vessel 6 of the sink 1 shown in Fig.1 to 6 form a letter U-shaped passage as a whole.

At each non-use state shown in Fig.1, FIg.4 and Fig.5, the separation vessel 5 and the water storage vessel 6 are filled with the oil free water (wastewater) after recovering oil content or with water put into after operations of making empty and cleaning the vessels, whereby entries of bad smell and insects can be prevented from the downstream of the water discharge pipe 9.

The water level at this stage as shown in the figures is the same level of the outlet of the upper open/close cock 5c for recovering oil content.

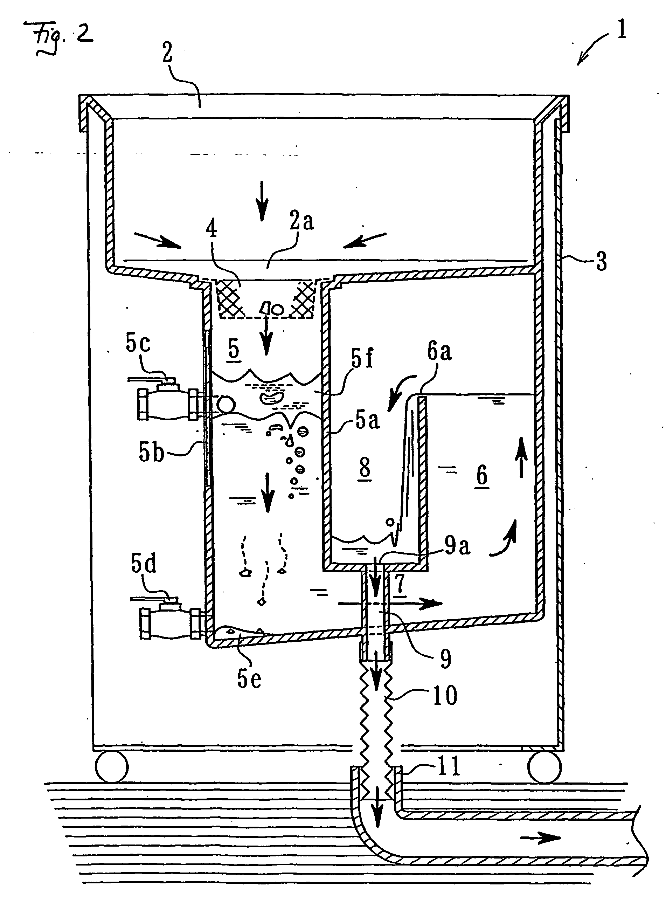

In the using state as shown in Fig.2, the wastewater coming into the separation vessel 5 from the basin 2 flows to the water discharge pipe 9 with the following:
(1) bigger garbage therein is caught by the garbage receiver 4;
(2) in the separation vessel 5, oil content and the garbage of lightweight compared with water come up to upper layer of the wastewater and the heavier garbage 5e than water settles down in the bottom, based on the difference in specific gravity among contents (such as water, oil content, garbage and so on) of the wastewater;
(3) as described the above, water content of the wastewater after separated from oil content and garbage moves down in the separation vessel 5 to pass through the connecting space 7 and further up to upper direction in the water storage vessel 6;
(4) the wastewater in this vessel 6 moves over the flooding water wall 6a and then passes through the buffer vessel 8, the water discharge pipe 9, the water discharge hose 10, and the water discharge passage 11, thereafter finally flows into sewer as such;

Meantime, an amount of recovered oil per day by the sink according to the invention as shown in figures is about 1.2 to 3.6 liters in case of the sink for business use.

And about 30 to 40 liters of water is stored in the separation vessel 5 and the storage vessel 6 (including in the connecting space 7) of each sink shown in Fig. 1, Fig. 4 and Fig. 5.

By containing the above-mentioned amount of water in the sink, a height between the water surface and the lowest end of the backside wall 5a in Fig.1 or the partition wall 12 in Fig.4 and Fig.5 is kept around 400 mm so as to prevent further movement of oil content in the wastewater flowing into the separation vessel 5 to the water storage vessel 6.

In other wards, by securing the above-mentioned amount of the water (about 30 to 40 liters) and the height of water (around 400 mm) in the separation vessel 5, oil content moving velocity downward in this vessel 5 is suppressed and a probability of the oil content movement to the lowest end of the backside wall 5a or the partition wall 12 is reduced.

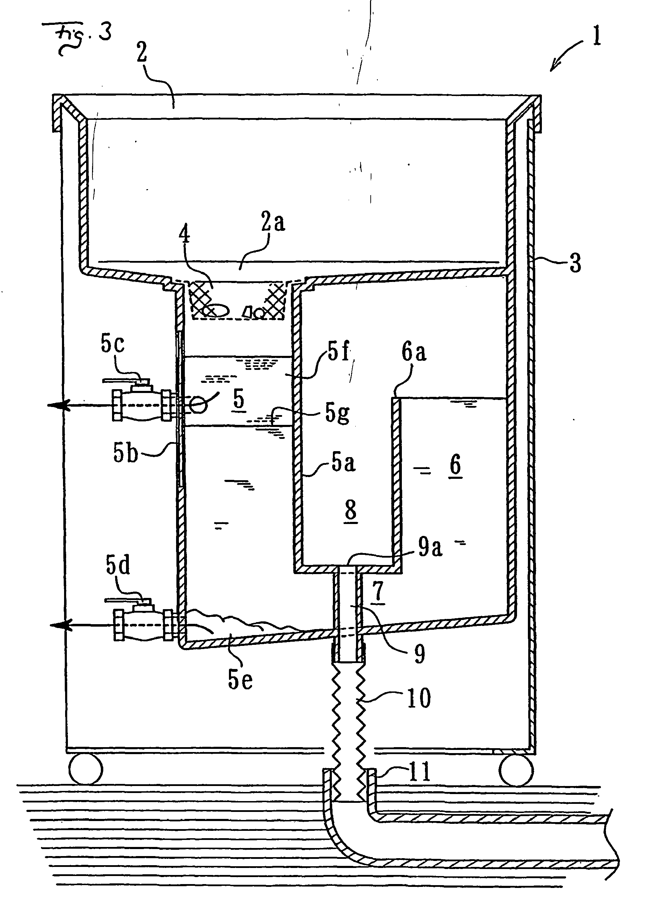

As oil content dose not move up to the lowest end and besides comes up by receiving buoyant force through the wastewater, surface of the separation vessel 5 is to be a separated state of the oil content at upper phase and the water at lower phase shown in Fig.3.

In the separated sate of Fig.3,
- the oi-1--con-t-e-nt surface in the separation vessel 5 is higher than the upper open/close cock 5c in height,
- the boundary part 5g between the oil content 5f and the residual wastewater is lower than the upper open/close cock 5c in height,
- the wastewater surface of the water storage vessel 6 is just at the highest end of the flooding water wall 6a.

In this separated state of the sink, it is easily and effectively handled to take out the oil content 5f by opening the upper open/close cock 5c and to take out the garbage 5e by opening the lower open/close cock 5d selectively from the sink 1. It is optional whether all the wastewater stored in the separation vessel 5 and the water storage vessel 6 is taken out by opening the lower open/close cock 5d.

When opening the upper open/close cock 5c, the oil content 5f stored in higher space of the separation vessel 5 is outside discharged, and therewith the boundary part 5g accordingly moves up and the water surface of the water storage vessel 6 also accordingly comes down.

These up and down movements are caused by that the oil content 5f is reduced due to taking out thereof and this reduced amount of wastewater backs to the separation vessel 5 from the water storage vessel 6.

In case the boundary part 5g still remains lower position than the outlet of the upper open/close cock 5c after moving up thereof and hence the residual oil content 5f is fully discharged from the cock 5c (which can be checked through the water level window 5b), water is newly to be added into the separation vessel 5 from the opening 2a so as to lift bottom level of the oil content 5f up to outlet position of the cock 5c, along with checking inside through the window 5b.

The downstream structure (the separation vessel 5, the water storage vessel 6, the connecting space 7,the buffer vessel 8,the water discharge pipe 9 and so on) against opening 2a may be made as each separate body from the basin 2 and connected to a basin of a conventional sink.

The separation vessel 5 and the water storage vessel 6 of the sink 1 shown in Fig.4 and Fig.5 are adjoining with the partition wall 12, the sink of which is equivalent to type with the flooding water wall 6a shifted to the backside wall 5a, on the sink of Fig.1, and thereby the connecting space 7 and the buffer vessel 8 are eliminated.

Further to the above, the sink shown in Fig. 4 and Fig.5 has the water discharge pipe 9 of which inlet 9a is arranged at a position corresponding to the highest end of the flooding water wall 6a shown in Fig.1. According to this structure, a boundary part between oil content and water content in the sink of Fig. 4 and Fig.5 is closely formed at the position as shown in Fig.3, too.

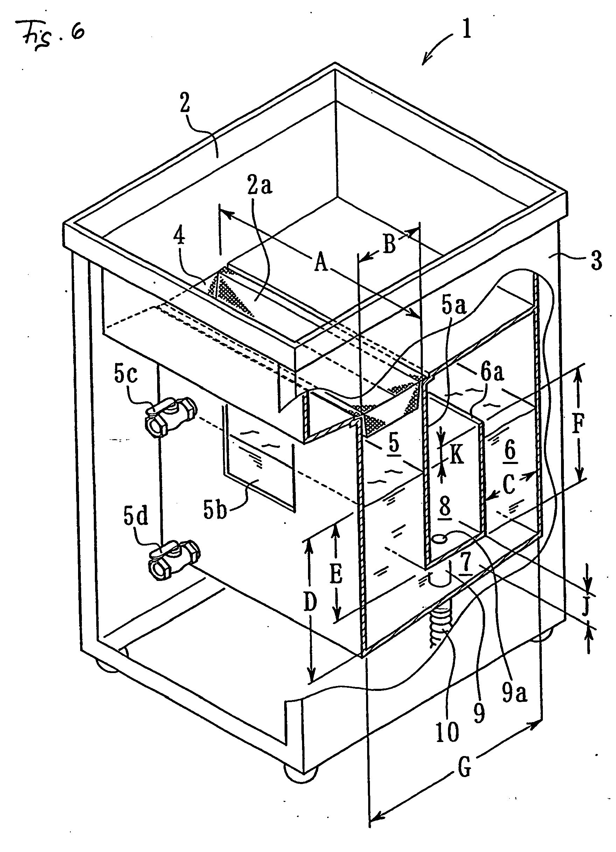

Dimensions of each part of the sink 1 shown in Fig.6 are for instance as follows.
A (width of the basin 2) 420mm
B (depth of the separation vessel 5) 135mm
C (depth of the water storage vessel 6) 135mm
D (height from the lowest end of the front wall to the water surface in the separation vessel 5 shown in Fig.1) 350mm
E (height from the lowest end of the backside wall 5a to the water surface in the separation vessel 5 show in Fig.1) 265mm
F (height of the flooding water wall 6a of the water storage vessel 6) 280mm
G (distance between the front wall the separation vessel 5 and the backside wall of the water storage vessel 6) 405mm
J (difference in height between the lowest end of the flooding water wall 6a and the bottom of the storage vessel 6, the connecting space 7) 75mm
K (difference in height between the water surface shown in Fig.1 and the highest end of the flooding water wall 6a: F-E) 15mm

Now dimensions of the sink shown in Fig.4 and Fig.5 are respectively the same as these of the sink shown in Fig.6 as above. For example, the above value K corresponds to the difference in height direction between the end of inlet 9a of the water discharge pipe 9 and the water surface shown in Fig.4 and Fig.5.

### Industrial applicability

As described above, it is possible for the sink with oil content recovery function according to the invention to discharge the oil free wastewater: oil content and water content of the wastewater is separated, and the oil content could be taken out from the sink. The sink of the invention is therefore useful for various business uses in restaurants, hospitals and household kitchens so as to contribute environmental conservation of sewage plant and rivers.

## Claims

1. A sink comprising:
a separation vessel into which wastewater flows, therein separating oil content from said wastewater based on the difference in specific gravity between said oil content and water;
a water storage vessel forming a letter U-shaped passage as a whole together with said separation vessel and storing said wastewater sent from said separation vessel up to a predetermined water level;
a draining means to make flooding water from said water storage vessel flow out; and
an open/close means provided at the side of said separation vessel for recovering said separated oil content floating, inside said separation vessel, at space corresponding to said predetermined water level.

2. The sink as claimed in Claim 1,
wherein said draining means has a structure with a buffer vessel, which is formed between said separation vessel and said water storage vessel, for buffering a stream of said flooding water,.

3. The sink as claimed in Claim 1,
wherein said separation vessel and said water storage vessel are adjacent each other with a common partition member for forming said letter U-shaped passage, and said draining means has a structure with an inlet formed at position of said predetermined water level on a circumferential side wall of said water storage vessel and a pipe-shaped member formed out so as to connect said inlet and outside of said water storage vessel.

4. The sink as claimed in Claim 1,
wherein said separation vessel and said water storage vessel are adjacent each other with a common partition member for forming said letter U-shaped passage, and said draining means has a structure with an inlet formed at position of said predetermined water level within said water storage vessel and a pipe-shaped member formed therein so as to connect said inlet and outside of said water storage vessel.

## Patentansprüche

1. Spülbecken bzw. Einlaufschacht umfassend:
ein Trenngefäß, in welches Abwasser strömt, in dem der Ölanteil vom Abwasser, basierend auf der Differenz im spezifischen Gewicht zwischen Ölanteil und Wasser, getrennt wird;
ein Wasserspeichergefäß, das einen U-förmigen Durchlass bzw. Kanal gemeinsam mit dem Trenngefäß bildet, wobei dieses aus dem Trenngefäß kommende Abwasser bis auf ein bestimmtes Wasserniveau zugeführt wird;
ein Ablaufmittel, das veranlasst, dass aus dem Wasserspeichergefäß überlaufendes Wasser abströmt; und
ein Öffnungs-/Schließmittel an der Seite dieses Trenngefäßes zur Rückgewinnung dieses abgetrennten innerhalb dieses Trenngefäßes aufschwimmenden Ölanteils an einem Ort entsprechend dem vorbestimmten Wasserstand.

2. Spülbecken bzw. Einlaufschacht nach Anspruch 1,
wobei dieses Ablaufmittel über einen Aufbau mit einem Puffergefäß, das zwischen diesem Trenngefäß und diesem Wasserspeichergefäß zum Puffern eines Stroms dieses überlaufenden Wassers ausgebildet ist, verfügt.

3. Spülbecken bzw. Einlaufschacht nach Anspruch 1,
wobei dieses Trenngefäß und dieses Wasserspeichergefäß benachbart einander mit einem gemeinsamen Trennelement, um den U-förmigen Kanal zu bilden, ausgebildet sind, und wobei dieses Ablaufmittel einen Aufbau mit einem Einlass an einem Ort des vorbestimmten Wasserstandes oder Wasserniveaus auf einer Umfangsseitenwand dieses Wasserspeichergefäßes sowie mit einem rohrförmigen Element hat, das so ausgebildet ist, dass dieser Einlass mit der Umgebung außerhalb dieses Wasserspeichergefäßes verbunden wird.

4. Spülbecken bzw. Einlaufschacht nach Anspruch 1,
wobei dieses Trenngefäß und das Wasserspeichergefäß benachbart einander mit einem gemeinsamen Trennelement zur Bildung dieses U-förmigen Kanals angeordnet sind, und das Ablaufmittel so aufgebaut ist, dass es über einen Einlass am Ort dieses vorbestimmten Wasserniveaus innerhalb dieses Wasserspeichergefäßes und über ein darin ausgebildetes rohrförmig gestaltetes Element verfügt, so dass dieser Einlass mit der Umgebung außerhalb dieses Wasserspeichergefäßes verbunden ist.

## Revendications

1. Bac comprenant :
un récipient de séparation dans lequel l'eau usée s'écoule, séparant ainsi le contenu d'huile de ladite eau usée en fonction de la différence de poids spécifique entre ledit contenu d'huile et l'eau;
un récipient de stockage d'eau formant un passage en forme de U dans un ensemble conjointement avec ledit récipient de séparation, et stockant ladite eau usée envoyée dudit récipient de séparation jusqu'à un niveau d'eau prédéterminé ;
des moyens d'évacuation pour faire sortir l'eau de remplissage dudit récipient de stockage d'eau ; et
des moyens d'ouverture/fermeture prévus sur le côté dudit récipient de séparation pour récupérer ledit contenu d'huile séparé flottant, à l'intérieur dudit récipient de séparation, au niveau de l'espace correspondant audit niveau d'eau prédéterminé.

2. Bac selon la revendication 1, dans lequel lesdits moyens d'évacuation ont une structure avec un récipient tampon, qui est formé entre ledit récipient de séparation et ledit récipient de stockage d'eau, pour amortir un courant de ladite eau de remplissage.

3. Bac selon la revendication 1, dans lequel ledit récipient de séparation et ledit récipient de stockage d'eau sont adjacents l'un à l'autre avec un élément de séparation commun pour former ledit passage en forme de U, et lesdits moyens d'évacuation ont une structure avec une entrée formée à l'emplacement dudit niveau d'eau prédéterminé sur une paroi latérale circonférentielle dudit récipient de stockage d'eau et un élément en forme de tuyau formé à l'extérieur afin de raccorder ladite entrée et l'extérieur dudit récipient de stockage d'eau.

4. Bac selon la revendication 1, dans lequel ledit récipient de séparation et ledit récipient de stockage d'eau sont adjacents l'un à l'autre avec un élément de séparation commun pour former ledit passage en forme de U, et lesdits moyens d'évacuation ont une structure avec une entrée formée à l'emplacement dudit niveau d'eau prédéterminé à l'intérieur dudit récipient de stockage d'eau et un élément en forme de tuyau formé à l'intérieur de celui-ci afin de raccorder ladite entrée et l'extérieur dudit récipient de stockage d'eau.
